# EUROPÄISCHE PATENTSCHRIFT

(11) **EP 0 802 882 B1**
(45) Veröffentlichungstag und Bekanntmachung des Hinweises auf die Patenterteilung: **18.09.2002**
(21) Anmeldenummer: 96900252.6
(22) Anmeldetag: 05.01.1996
(51) Int. Cl.: C01B 31/10

(54) **VERFAHREN ZUR HERSTELLUNG VON KÖRNIGER AKTIVKOHLE**
PROCESS FOR PRODUCING GRANULATED ACTIVE CARBON
PROCEDE DE PRODUCTION DE CHARBON ACTIF GRANULEUX

(30) Priorität: 11.01.1995 DE 19500573; 10.03.1995 DE 19508565
(43) Veröffentlichungstag der Anmeldung: 29.10.1997
(73) Patentinhaber: MHB Filtration GmbH & CO. KG, 40699 Erkrath (DE)
(72) Erfinder: Von Blücher, Hasso, 40699 Erkrath (DE); de Ruiter, Ernest, Dr., 51381 Leverkusen (DE)
(74) Vertreter: Voth, Gerhard
(86) Internationale Anmeldenummer: DE9600011
(87) Internationale Veröffentlichungsnummer: WO96021616

(56) Entgegenhaltungen:
- EP-A- 0 326 271
- DD-A- 63 768
- FR-A- 2 687 941
- PATENT ABSTRACTS OF JAPAN vol. 012 no. 050 (C-476) ,16.Februar 1988 & JP,A,62 197308 (JAPAN ORGANO CO LTD;OTHERS: 01) 1.September 1987,
- DATABASE WPI Section Ch, Week 7824 Derwent Publications Ltd., London, GB; Class A97, AN 78-43050A & JP,A,53 050 088 ( SUMITOMO CHEM CO LTD) , 8.Mai 1978
- CHEMICAL ABSTRACTS, vol. 110, no. 10, 6.März 1989 Columbus, Ohio, US; abstract no. 76950v, ARTYUSHENKO V.V. & AL. 'Activation of styrene-divinylbenzene copolymer in a fluidized bed' Seite 61; & KHIM. TEKHNOL., Nr. 6, 1988 Seiten 45-51,
- CHEMICAL ABSTRACTS, vol. 119, no. 4, 26.Juli 1993 Columbus, Ohio, US; abstract no. 30980n, SENTEK JAN & AL. 'Manufacture of a carbon sorbent for medical use' Seite 174; & PREZM. CHEM., Bd. 72, Nr. 5, 1993 Seiten 205-207,

## Beschreibung

Adsorptive Verfahren haben zum Ziel, Stoffe zu trennen bzw. Flüssigkeiten oder Gase von unerwünschten Begleitstoffen zu befreien. Eines der ältesten und noch heute am häufigsten eingesetzten Adsorbentien ist Aktivkohle, welche dem Fachmann als Pulverkohle, Kornkohle und Formkohle bekannt ist. Eine besondere Form der Kornkohle ist die Kugelkohle, die wegen ihrer hohen Festigkeit und guten Rieselfähigkeit für besondere Anwendungen sehr geschätzt ist. Kugelkohlen haben durchwegs Durchmesser unter 1 mm. Kugelkohle kann entweder aus Pechen (DE-A-29 32 257) oder speziell für diesen Zweck synthetisierten porösen Polymeren (US-A-4 040 990) hergestellt werden. Neuerdings ist es gelungen, aus verbrauchten Kationenaustauschem ebenfalls eine gute Kugelkohle herzustellen (DE-A-43 04 026). Zwar können auch neue, ungebrauchte Kationenaustauscher als Ausgangsmaterial dienen, aber es ist zu befürchten, daß bei diesem Verfahren die Wirtschaftlichkeit nicht mehr gegeben ist.

Ionenaustauscher werden in mehreren Stufen hergestellt, wie am Beispiel eines klassischen makroporösen Kationenaustauschers gezeigt werden soll: Zuerst werden die Monomeren - hauptsächlich Styrol mit etwas Divinylbenzol - in Emulsion polymerisiert. Die ölige Phase enthält neben einem Lösungsmittel die Monomeren, Stabilisatoren und Initiatoren. Vor Beendigung der Polymerisation werden die Mikrotröpfchen der Emulsion zu porösen Kügelchen koaguliert, die jeweils aus 1 bis 3 Millionen Mikrotröpfchen bestehen. Inzwischen haben sich in dem Mikrotröpfchen Polymerketten gebildet, zwischen denen sich noch das Lösungsmittel befindet. Letzteres wird in der darauf folgenden Produktionsstufe wiedergewonnen, so daß ein Polymerskelett ohne aktive Gruppen resultiert. Es bilden sich Hohlräume nicht nur zwischen den Mikrotröpfchen, sondern auch zwischen den Polymerketten.

Die so erhaltene Vorstufe für die Herstellung makroporöser Kationenaustauscher ist trocken. In einem weiteren Schritt wird das Polymerskelett mit der 6- bis 10fachen Menge Schwefelsäure polysulfoniert. Die überschüssige Schwefelsäure muß in mehreren Schritten mühsam ausgewaschen werden. Der fertige Kationenaustauscher hat dann eine Austauschkapazität von etwa 4 mequ/g Sulfonsäuregruppen und noch etwa 50 % Feuchte.

Ein weiteres Verfahren, Ionenaustauscher herzustellen, ist die Tröpfchenpolymerisation. Dabei werden gelartige Kügelchen erhalten, die quellfähig sein müssen, da sie keine eigentlichen Poren besitzen. Aus diesem Grund beträgt der Divinylbenzol-Anteil 8 % oder weniger. Die Sulfonation ist möglich, weil die Polymerkügelchen in Schwefelsäure quellen.

Die Herstellung von Ionenaustauscherharzen vom Geltyp und von makroporösen (makroretikulierten) Ionenaustauscherharzen ist in dem Buch von Konrad Dorfner, "Ion Exchangers", Walter de Gruyter, Berlin/New York (1991) auf den Seiten 22 *bis* 24 und 201 bis 210 beschrieben.

### Einfügung 1

Aus der JP-A-62 197 308 ist ein Verfahren zum Herstellen von Kohlenstoffkügelchen bekannt. Diese werden aus einem mit 10 bis 30 % Divinylbenzol vernetzten synthetischen Harz durch Behandlung von Schwefelsäure bei Unterdruck in einem Inertgasstrom von 600 bsi 800 °C hergestellt. Hierfür ist eine Apparatur erforderlich, die für den entsprechenden Unterdruck geeignet ist. Außerdem muß Inertgas zur Verfügung gestellt werden.

Aus der JP-A-53 050 088 ist ein Verfahren zur Herstellung körniger Aktivkohle aus Kügelchen einer Styrol-Divinylbenzol-Copolymermatrix beschrieben. Dort wird die Matrix zunächst durch Sulfonierung unschmelzbar gemacht und das unschmelzbare Produkt zunächst mit Schwefelsäure und dann mit Wasser gewaschen. Das gewaschene Produkt wird anschließend getrocknet. Das getrocknete Produkt wird geschwelt und aktiviert. Für die Sulfonierung wird, bezogen auf das Ausgangsprodukt, eine Menge von ca. 600 % Schwefelsäure erforderlich.

Der Erfindung liegt die Aufgabe zugrunde, die Herstellung körniger Aktivkohle aus Kationenaustauschern eine mit höherer Ausbeute wirschaftlich herzustellen.

Es wurde nun überraschenderweise gefunden, daß die trockenen Kügelchen aus dem Polymerskelett, d.h. einer Styrol-Divinylbenzol-Copolymermatrix nach Entfernung des Lösungsmittels, also vor der Sulfonierung, mit guter Ausbeute in Aktivkohlekügelchen umgesetzt werden können, wenn beim Carbonisieren bereits zu Beginn Schwefelsäure zugesetzt wird. Das Gleiche gilt auch für Ionenaustauscher oder deren Vorstufen, die stickstoffhaltige basische Gruppen oder Carboxylgruppen enthalten.

Gegenstand der Erfindung ist demzufolge ein Verfahren zur Herstellung von körniger Aktivkohle, bei dem man Kügelchen einer Styrol-Divinylbenzol-Copolymermatrix mit 5 bis 50 Gew.-% Schwefelsäure, bezogen auf die Trockensubstanz der Matrix, bei Temperaturen bis mindestens 750 °C, vorzugsweise bis 900 °C, schwelt und anschließend das Pyrolyseprodukt bei Temperaturen von 800 bis 900 °C aktiviert.

In dem erfindungsgemäßen Verfahren wird vorzugsweise eine wasserfreie Matrix eingesetzt. Die Styrol-Divinylbenzol-Copolymermatrix ist insbesondere die Vorstufe der Herstellung von Anionenaustauschern oder von Kationenaustauschern ohne Sulfonsäuregruppen. Es kann sich um eine Vorstufe vom Typ eines makroporösen Polymeren oder vom Gel-Typ handeln. Die Matrix kann aber z.B. auch in Form von fertigen Anionenaustauschern vorliegen. Dann empfiehlt es sich, die eingesetzten Anionenaustauscher vor der Behandlung mit der Schwefelsäure zu trocknen.

In dem erfindungsgemäßen Verfahren wird die Schwefelsäure in Form von konzentrierter Schwefelsäure oder Oleum eingesetzt.

Wenn eine Styrol-Divinylbenzol-Copolymermatrix mit basischen Gruppen eingesetzt wird, sollte die eingesetzte Schwefelsäuremenge um die zur Neutralisierung der basischen Gruppen erforderliche Menge erhöht werden.

Bei der Schwelung bzw. Pyrolyse laufen folgende Reaktionen ab: Bei den makroporösen Polymeren dringt die Schwefelsäure in die Poren ein, ohne daß eine nennenswerte Quellung auftritt. Bei den gelartigen Polymeren findet hingegen eine merkliche Quellung statt. Beim Erhitzen werden die Kügelchen schwarz. Bis etwa 200 °C verdampft neben Wasserdampf etwas Schwefelsäure. Die meiste Schwefelsäure entweicht jedoch als SO₂. Die Schwelung in Gegenwart der Schwefelsäure ermöglicht eine hohe Ausbeute an Restkohlenstoff, d.h. fixierten Kohlenstoff. Der von 50 °C bis ca. 220 °C auftretende Gewichtsverlust (Thermowaage) ist im wesentlichen auf entweichendes SO₂, etwas Wasserdampf und noch abdampfende Schwefelsäure zurückzuführen. Der ohne Schwefelsäurezugabe zwischen 360 und 440 °C auftretende hohe Gewichtsverlust geht um 70 bis 80 % zurück. Das dabei zu beobachtende Verklumpen unterbleibt, und das Pyrolyseprodukt ist rieselfähig. Nach Carbonisierung bis 900 °C wird ein Gewichtsverlust, bezogen auf Trockensubstanz, von ca. 45 bis 50 % festgestellt. Das carbonisierte Material kann anschließend auf eine dem Fachmann bekannte Weise aktiviert werden.

Das Verhalten für makroporöse und gelartige Polymere bei der Schwelung ist sehr ähnlich, letztere haben jedoch nach dem Carbonisieren höhere Rütteldichten (0,9 gegenüber 0,7). Die BET-Oberfläche ist dagegen bei den makroporösen Polymeren höher (400-600 m²/g gegenüber 150 m²/g). Grundsätzlich sollte die Schwelung mindestens bis 750 °C, vorzugsweise bis 850 bis 900 °C, durchgeführt werden.

Nach dem Schwelen muß aktiviert werden. Das Aktivieren ist ein gezielter Abbrand, der mit einem oxidierenden Gas (CO₂, O₂, H₂O) vornehmlich zwischen 850 °C und 900 °C durchgeführt wird. Damit wird das Porensystem für die Adsorption zugänglich gemacht. Das Resultat sind Aktivkohlekügelchen mit BET-Oberflächen von 900 bis 1.500 m²/g und Rütteldichten von 450 bis 800 g/l.

Ein ca. 0,5 mm großes Kügelchen kann, ohne zu brechen, je nach Ausgangsmaterial und Aktivierungsgrad mit 10 bis 100 N belastet werden.

Schwelen und Aktivieren können ineinanderübergehen, d.h. praktisch in einem Arbeitsgang durchgeführt werden, wenn man gegen Ende der Schwelstufe ab 750 - 800 °C ein oxidierendes Gas, beispielsweise H₂O, mit einbläst und nach Erreichen einer Temperatur von 850 bis 900 °C, dort noch einige Zeit verweilt.

Die Schwelung und Aktivierung können beide im Drehrohrofen durchgeführt werden. Darüber hinaus kann die Aktivierung des geschwelten Materials auch in einer Wirbelschicht durchgeführt werden.

### Beispiel 1

Bei der Herstellung eines herkömmlichen Kationenaustauschers vom Geltyp (Basis Styrol, Divinylbenzol) wurden vor der Sulfonation 10 kg Kügelchen, die lediglich aus dem Polymerskelett, also ohne die für den Ionenaustausch erforderlichen chemischen Gruppen, dem Materialfluß entnommen. Die Kügelchen wurden in einem säurebeständigen Drehrohrofen der Fa. Plec (Köln) zusammen mit 1 kg konzentrierter Schwefelsäure in Stickstoffatmosphäre folgender thermischer Behandlung unterworfen:
Aufheizen auf 200 °C, (2 °C/min) und 20 min verweilen; es entweicht etwas Wasserdampf, SO₂ und etwas Schwefelsäure.
Aufheizen auf 300 °C (3 °C/min); es entweichen Kohlenwasserstoffe (Depolymerisation), Wasserdampf, CO₂ und SO₂.
Aufheizen auf 400 °C (5 °C/min); es entweicht SO₂ und etwas CO₂.
Aufheizen auf 800 °C (3 °C/min); es entweicht CO₂, später CO, etwas KW und SO₂; das Material schrumpft.
Aufheizen auf 900 °C (3 °C/min); keine wesentlichen Veränderungen.
Der Gewichtsverlust, bezogen auf Trockensubstanz, beträgt ca. 45 %. Das carbonisierte Material hat eine Rütteldichte von ca. 0,9, eine BET-Oberfläche von ca. 150 m²/g und eine Druckfestigkeit von ca. 100 N pro Kügelchen von 0,6 mm Durchmesser.
Das gesamte geschwelte Material (3,85 kg) wurde im gleichen Drehrohrofen bei 900 °C mit einem Gemisch aus 75 % N₂ und 25 % H₂O begast und nach 2 Stunden im Ofen abgekühlt.
Es resultierte eine Kugelkohle mit Rütteldichte von 0,72, einer BET-Oberfläche von ca. 1.300 m²/g und einer Druckfestigkeit von 45 N pro
Kügelchen von 0,5 mm. Die Ausbeute betrug, bezogen auf geschweltes Material, 66 % (2,55 kg).

### Beispiel 2

Bis zur Schweltemperatur von 700 °C war der Ablauf der gleiche wie in Beispiel 1. Dann wurde ein N₂/H₂O-Gemisch (75/25) eingeführt, so daß ab 700 °C zu Ende geschwelt und gleichzeitig aktiviert wurde. Im Endprodukt wurden keine wesentlichen Unterschiede zu Beispiel 1 festgestellt.

### Beispiel 3

In gleicher Weise wie im Beispiel 1 wurde ein makroporöses Vorprodukt eines Kationenaustauschers geschwelt und aktiviert. Abgesehen von einer schnelleren Aktivierung (1 Stunde gegen 2 1/2 Stunden) und einer geringeren Rütteldichte (0,53 gegenüber 0,72) wurden keine wesentlichen Unterschiede zu Beispiel 1 registriert.

### Beispiel 4

In einen Drehrohrofen aus Spezialstahl und einer Kapazität von 20 1 wurden 10 kg des Anionenaustauschers DOW Mono 66 mit 50 % Feuchtegehalt, 2,4 kg Schwefelsäure 96 %, bis zur Erreichung einer Temperatur von 890 °C geschwelt. Der Temperaturanstieg betrug etwa 1 °C/min.
Ab 260 °C und bis ca. 320 °C wurde viel Schwefeldioxid freigesetzt. Nach Erreichung der Temperatur von 890 °C wurde abgekühlt. Die Kügelchen des Pyrolyseprodukts waren glänzend und hatten ein Schüttgewicht von ca. 0,8 g/cm³. Die Ausbeute bezogen auf Trockensubstanz betrug 46 %.
Die geschwelten Kügelchen konnten bei 900 °C mit einem Stickstoff-Wasserdampf-Gemisch im Verhältnis 4 : 1 sowohl im Drehrohr wie in der Wirbelschicht zu guten Adsorbentien einer inneren Oberfläche nach BET von 1.300 m²/g aktiviert werden. Die Ausbeuten, bezogen auf Trockenprodukt, betrug 32 %.

### Vergleichsversuch

Im gleichen Drehrohrofen und unter gleichen Bedingungen wie von Beispiel 4 wurde die gleiche Menge des Anionenaustauschers ohne Schwefelsäurezusatz geschwelt. Die Ausbeute an Schwelprodukt, bezogen auf die Trockensubstanz des eingesetzten Anionenaustauschers betrug nur 19 %. Die Kügelchen waren überwiegend blasig und oft zerstört. Wegen der schlechten Ausbeute wurde der Versuch nicht fortgesetzt.

## Patentansprüche

1. Verfahren zur Herstellung von körniger Aktivkohle, wobei Kügelchen einer Styrol-Divinylbenzol-Copolymermatrix mit Schwefelsäure in Form von Oleum benetzt, diese bei Temperaturen bis mindestens 750 °C, vorzugsweise bis 900 °C, schwelt und anschließend das Pyrolyseprodukt bei Temperaturen von 800 bis 900 °C aktiviert, **dadurch gekennzeichnet, daß** die Schwefelsäure in Form von Oleum mit 5 bis 50 Gew.-%, bezogen auf die Trockensubstanz der Matrix, eingesetzt wird.

2. Verfahren nach Anspruch 1, **dadurch gekennzeichnet, daß** eine wasserfreie Matrix eingesetzt wird.

3. Verfahren nach Anspruch 1, **dadurch gekennzeichnet, daß** die Styrol-Divinylbenzol-Copolymermatrix die Vorstufe von Anionenaustauschem ist.

4. Verfahren nach Anspruch 1, **dadurch gekennzeichnet, daß** die Styrol-Divinylbenzol-Polymermatrix die Vorstufe von Kationenaustauschern ohne Sulfonsäuregruppen ist.

5. Verfahren nach Anspruch 1, **dadurch gekennzeichnet, daß** die Styrol-Divinylbenzol-Copolymermatrix in Form von Anionenaustauschern vorliegt.

6. Verfahren nach Anspruch 5, **dadurch gekennzeichnet, daß** die eingesetzten Anionenaustauscher vor der Behandlung mit der Schwefelsäure getrocknet werden.

7. Verfahren nach einem der Ansprüche 1 bis 6, **dadurch gekennzeichnet, daß** die Menge an Schwefelsäure, bezogen auf die Trockensubstanz 10 bis 15 Gew.-% beträgt.

8. Verfahren nach einem der Ansprüche 1 bis 7, **dadurch gekennzeichnet, daß** in Fällen, in denen die Styrol-Divinylbenzol-Copolymermatrix basische Gruppen enthält, die angewendete Schwefelsäuremenge um die zur Neutralisierung der basischen Gruppen erforderliche Menge erhöht wird.

9. Verfahren nach einem der Ansprüche 1 bis 8, **dadurch gekennzeichnet, daß** die Vorstufe ein makroporöses Polymer ist.

10. Verfahren nach einem der Ansprüche 1 bis 8, **dadurch gekennzeichnet, daß** die Vorstufe ein Polymer vom Gel-Typ ist.

11. Verfahren nach einem oder mehreren der Ansprüche 1 bis 10, **dadurch gekennzeichnet, daß** in einer ersten Stufe bis mindestens 750 °C, vorzugsweise 850-900 °C, geschwelt wird und in einer zweiten Stufe bei 800-900 °C, vorzugsweise 850-900°C, aktiviert wird.

12. Verfahren nach einem oder mehreren der Ansprüche 1 bis 11, **dadurch gekennzeichnet, daß** die Aktivierung mit Wasserdampf durchgeführt wird.

13. Verfahren nach einem oder mehreren der Ansprüche 1 bis 12, **dadurch gekennzeichnet, daß** die Aktivierung mit Luftsauerstoff durchgeführt wird.

14. Verfahren nach einem oder mehreren der Ansprüche 1 bis 13, **dadurch gekennzeichnet, daß** die Aktivierung mit CO₂ durchgeführt wird.

15. Verfahren nach einem oder mehreren der Ansprüche 1 bis 14, **dadurch gekennzeichnet, daß** der Schwelvorgang in einem Drehrohrofen durchgeführt wird.

16. Verfahren nach einem oder mehreren der Ansprüche 1 bis 15, **dadurch gekennzeichnet, daß** die Aktivierung in einem Drehrohrofen durchgeführt wird.

17. Verfahren nach einem oder mehreren der Ansprüche 1 bis 16, **dadurch gekennzeichnet, daß** die Schwelung und die Aktivierung in einem Arbeitsgang durchgeführt werden, wobei der anfangs inerten Atmosphäre ab 750-800 °C ein oxidierendes Gas zugegeben wird.

18. Verfahren nach einem oder mehreren der Ansprüche 1 bis 17, **dadurch gekennzeichnet, daß** die Aktivierung in Wirbelschicht durchgeführt wird.

## Claims

1. Method of producing granular active carbon, wherein small beads of a styrene-divinylbenzene copolymer matrix are wetted with sulphuric acid in the form of oleum, said acid is carbonised at temperatures up to at least 750° C, preferably up to 900° C, and subsequently the pyrolysis product is activated at temperatures of 800 to 900° C, **characterised in that** the sulphuric acid is used in the form of oleum with 5 to 50 % by wt. relative to the dry matter of the matrix.

2. Method according to claim 1, **characterised in that** an anhydrous matrix is used.

3. Method according to claim 1, **characterised in that** the styrene-divinylbenzene copolymer matrix is the preliminary stage of anion exchangers.

4. Method according to claim 1, **characterised in that** the styrene-divinylbenzene copolymer matrix is the preliminary stage of cation exchangers without sulphonic acid groups.

5. Method according to claim 1, **characterised in that** the styrene-divinylbenzene copolymer matrix is in the form of anion exchangers.

6. Method according to claim 5, **characterised in that** the anion exchangers used are dried prior to the treatment with the sulphuric acid.

7. Method according to one of claims 1 to 6, **characterised in that** the quantity of sulphuric acid is 10 to 15 % by wt. relative to the dry matter.

8. Method according to one of claims 1 to 7, **characterised in that**, in cases in which the styrene-divinylbenzene copolymer matrix contains basic groups, the quantity of sulphuric acid used is increased by the quantity required to neutralise the basic groups.

9. Method according to one of claims 1 to 8, **characterised in that** the preliminary stage is a macroporous polymer.

10. Method according to one of claims 1 to 8, **characterised in that** the preliminary stage is a polymer of the gel type.

11. Method according to one or more of claims 1 to 10, **characterised in that** low-temperature carbonisation is effected in a first stage up to at least 750° C, preferably 850-900° C, and activation is effected in a second stage at 800-900° C, preferably 850-900° C.

12. Method according to one or more of claims 1 to 11, **characterised in that** the activation is accomplished with water vapour.

13. Method according to one or more of claims 1 to 12, **characterised in that** the activation is accomplished with atmospheric oxygen.

14. Method according to one or more of claims 1 to 13, **characterised in that** the activation is accomplished with CO₂.

15. Method according to one or more of claims 1 to 14, **characterised in that** the low-temperature carbonising process is accomplished in a rotary cylindrical furnace.

16. Method according to one or more of claims 1 to 15, **characterised in that** the activation is accomplished in a rotary cylindrical furnace.

17. Method according to one or more of claims 1 to 16, **characterised in that** the low-temperature carbonisation and the activation are accomplished in one operation, an oxidising gas being added to the initially inert atmosphere as from 750-800° C.

18. Method according to one or more of claims 1 to 17, **characterised in that** the activation is accomplished in a fluidised bed.

## Revendications

1. Procédé de production de charbon actif en grains dans lequel des billettes d'une matrice de copolymère styrène/divinylbenzène sont mouillées avec de l'acide sulfurique sous forme d'oléum, carbonise celles-ci à des températures allant au moins jusqu'à 750°C, de préférence jusqu'à 900°C, et ensuite active le produit de pyrolyse à des températures allant de 800 à 900°C,
**caractérisé en ce qu'**
on met en oeuvre l'acide sulfurique sous forme d'oléum ayant de 5 à 50 % en poids, rapporté à la substance sèche de la matrice.

2. Procédé selon la revendication 1,
**caractérisé en ce qu'**
on met en oeuvre une matrice anhydre.

3. Procédé selon la revendication 1,
**caractérisé en ce que**
la matrice de copolymère styrène/divinylbenzène est le stade précurseur d'échangeurs d'anions.

4. Procédé selon la revendication 1,
**caractérisé en ce que**
la matrice de copolymère styrène/divinylbenzène est le stade précurseur d'échangeurs de cations sans groupe acide sulfonique.

5. Procédé selon la revendication 1,
**caractérisé en ce que**
la matrice de copolymère styrène/divinylbenzène se présente sous forme d'échangeurs d'anions.

6. Procédé selon la revendication 5,
**caractérisé en ce que**
les échangeurs d'anions mis en oeuvre sont séchés avant le traitement avec l'acide sulfurique.

7. Procédé selon la revendication 1,
**caractérisé en ce que**
la quantité d'acide sulfurique - rapporté à la substance sèche - est de 10 à 15 % en poids.

8. Procédé selon l'une des revendications 1 à 7,
**caractérisé en ce que**
dans les cas où la matrice de copolymère styrène/divinylbenzène contient des groupes basiques, la quantité d'acide sulfurique utilisée est augmentée de la quantité nécessaire pour la neutralisation des groupes basiques.

9. Procédé selon l'une des revendications 1 à 8,
**caractérisé en ce que**
le stade précurseur est un polymère macroporeux.

10. Procédé selon l'une des revendications 1 à 8,
**caractérisé en ce que**
le stade précurseur est un polymère du type gel.

11. Procédé selon l'une ou plusieurs des revendications 1 à 10,
**caractérisé en ce qu'**
on carbonise dans une première étape jusqu'au moins 750°C, de préférence 850 - 900°C, de préférence à 850-950°C.

12. Procédé selon l'une ou plusieurs des revendications 1 à 11,
**caractérisé en ce qu'**
on effectue l'activation avec de la vapeur d'eau.

13. Procédé selon l'une ou plusieurs des revendications 1 à 12,
**caractérisé en ce qu'**
on effectue l'activation avec de l'oxygène atmosphérique.

14. Procédé selon l'une ou plusieurs des revendications 1 à 13,
**caractérisé en ce qu'**
on effectue l'activation avec du CO₂.

15. Procédé selon l'une ou plusieurs des revendications 1 à 14,
**caractérisé en ce qu'**
on effectue le processus de carbonisation dans un four tubulaire rotatif.

16. Procédé selon l'une ou plusieurs des revendications 1 à 15,
**caractérisé en ce qu'**
on effectue l'activation dans un four tubulaire rotatif.

17. Procédé selon l'une ou plusieurs des revendications 1 à 16,
**caractérisé en ce qu'**
on effectue la carbonisation et l'activation dans une étape opératoire dans laquelle on ajoute à l'atmosphère inerte initiale à partir de 750-800°C, un gaz oxydant.

18. Procédé selon l'une ou plusieurs des revendications 1 à 17,
**caractérisé en ce que**
l'activation est effectuée en lit fluidisé.
